# EUROPÄISCHE PATENTSCHRIFT

(11) **EP 1 475 876 B1**
(45) Veröffentlichungstag und Bekanntmachung des Hinweises auf die Patenterteilung: **05.01.2011**
(21) Anmeldenummer: 03010066.3
(22) Anmeldetag: 03.05.2003
(51) Int. Cl.: H02J 7/00

(54) **Ladegerät für einen Akkupack, sowie Anordnung aus Ladegerät und Akkupack**
Charger for a battery assembly and arrangement comprising a charger and a battery assembly
Chargeur pour un bloc-batterie et dispositif constitué d'un chargeur et d'un bloc-batterie

(43) Veröffentlichungstag der Anmeldung: 10.11.2004
(73) Patentinhaber: Metabowerke GmbH, 72602 Nürtingen (DE)
(72) Erfinder: Stickel, Wolfgang, Dipl.-Ing. (FH), 72660 Beuren (DE); Wiesner, Bernd, Dipl.-Ing. (FH), 73277 Owen (DE)
(74) Vertreter: Raunecker, Klaus Peter

(56) Entgegenhaltungen:
- EP-A- 0 920 105
- EP-A- 0 940 864
- EP-A- 0 978 923
- EP-A1- 1 381 134
- US-A- 6 027 535
- US-B2- 6 967 464
- PATENT ABSTRACTS OF JAPAN vol. 1996, no. 11, 29. November 1996 (1996-11-29) & JP 08 185898 A (YAMAHA MOTOR CO LTD), 16. Juli 1996 (1996-07-16)
- PATENT ABSTRACTS OF JAPAN vol. 1999, no. 09, 30. Juli 1999 (1999-07-30) & JP 11 122829 A (YAMAHA MOTOR CO LTD), 30. April 1999 (1999-04-30)
- PATENT ABSTRACTS OF JAPAN vol. 2002, no. 07, 3. Juli 2002 (2002-07-03) & JP 2002 084604 A (SANYO ELECTRIC CO LTD), 22. März 2002 (2002-03-22)

## Beschreibung

Die vorliegende Erfindung betrifft ein Ladegerät für einen Akkupack eines Elektrohandwerkzeuggeräts, mit einer Gebläseeinrichtung zur Kühlung des Akkupacks während des Ladens.

Ein derartiges Ladegerät ist in EP 0 920 105 A2 beschrieben. Bei diesem Ladegerät bläst ein im Ladegerät eingebauter Lüfter Kühlluft in den Akkupack hinein und durch diesen hindurch. Eine gleichzeitige Kühlung elektronischer Komponenten des Ladegeräts ist nicht offenbart.

Aus DE 196 07 226 A1 der Anmelderin ist ein Ladegerät mit geeignet angeordneten Lüftungsschlitzen bekannt, wobei die Kühlung der elektronischen Komponenten des Ladegeräts nicht durch eine Gebläseeinrichtung, sondern durch Konvektion erreicht wird. Eine Kühlung des Akkupacks ist nicht vorgesehen.

Aus der nicht veröffentlichen EP 1 381 134 A1 ist ein Ladegerät für einen Akkupack eines Elektrohandwerkzeugs bekannt, bei dem elektronische Komponenten im Inneren des Ladegeräts auf der Abstromseite der Gebläseeinrichtung vorgesehen sind.

JP-A-08 185 898 offenbart eine Aufsatzgebläsevorrichtung für ein eine Batterieanordnung aufnehmendes Behältnis bei einem Fahrzeug, wobei Kühlluft in das Behältnis eingesaugt und zur Kühlung der Batterieanordnung verwendet wird. Die Aufsatzgebläseeinrichtung umfasst bei einer Ausführform ein Ladegerät. Eine Kühlung von elektronischen Komponenten im Inneren des Ladegeräts ist nicht offenbart.

Der vorliegenden Erfindung liegt die Aufgabe zugrunde, ein Ladegerät der eingangs genannten Art im Hinblick auf eine effektive Kühlung weiter zu verbessern.

Diese Aufgabe wird erfindungsgemäß gelöst durch ein Ladegerät mit der Merkmalen des Anspruchs 1.

Im Unterschied zu dem eingangs genannten Ladegerät ist die Gebläseeinrichtung so orientiert und angeordnet, dass sie sowohl zur Kühlung des Akkupacks als auch zur Kühlung elektronischer Komponenten im Inneren des Ladegeräts dient. Nach der Erfindung wird die Kühlluft durch die Einströmöffnung eingesogen, die von einer Wandung des Akkupacks überdeckbar oder überfangbar ist. Der Akkupack ist in noch näher zu beschreibender Weise ebenfalls von Kühlluft durchströmbar und weist im Bereich der Einströmöffnung des Ladegeräts eine Ausströmöffnung auf; so kann in das Ladegerät Kühlluft, die zuvor durch den Akkupack gesogen wurde, in das Innere des Ladegeräts eingesogen werden und dort elektronische Komponenten kühlen. Die Einströmöffnung und zu kühlende elektronische Komponenten des Ladegeräts sowie die nach außen fördernde Gebläseeinrichtung sind so angeordnet, dass durch die genannte Einströmöffnung eingesogene Luft im Betrieb der Gebläseeinrichtung und des Ladegeräts auf ihrem Weg zur Gebläseeinrichtung die zu kühlenden elektronischen Komponenten beaufschlagt, überstreicht oder umströmt, so dass sie gekühlt werden.

In weiterer Ausbildung der Erfindung erweist es sich als vorteilhaft, wenn im Inneren eines Ladegeräts ein mit einer elektronischen Komponente thermisch verbundenes Kühlblech vorgesehen ist, welches so angeordnet ist, dass es vom Luftstrom effektiv beaufschlagt wird. In bevorzugter Weise wird der Luftstrom an dem Kühlblech entlanggeführt. Der Einsatz eines Kühlblechs erweist sich insbesondere als vorteilhaft, wenn dieses thermisch mit einem Leistungstransistor oder einem anderen stark Wärme entwickelnden Bauteil verbunden ist. Vorteilhafterweise ist der Leistungstransistor über einen gut wärmeleitenden Kleber oder in sonstiger Weise an dem Kühlblech angebracht.

Nach einer weiteren bevorzugten Ausführungsform der Erfindung ist im Inneren des Ladegeräts ein Konvektionsbereich ausgebildet, der über untere Lufteintrittsöffnungen und über obere Luftausströmöffnungen konvektiv durchströmbar ist. Solchenfalls erweist es sich in Weiterbildung dieses Erfindungsgedankens als vorteilhaft, wenn der Konvektionsbereich von einem mit einer elektronischen Komponente thermisch verbundenen Kühlblech begrenzt ist. Somit können unterstützt oder anstelle des Betriebs der Gebläseeinrichtung, beispielsweise bei einem Ausfall der Gebläseeinrichtung, die stark wärmeentwickelnden elektronischen Komponenten, wie beispielsweise Leistungstransistoren, die mit dem Kühlblech verbunden sind, immer noch konvektiv gekühlt werden.

In Weiterbildung dieser Ausführungsform erweist es sich als vorteilhaft, wenn der Konvektionsbereich einerseits außen von einer Gehäusewandung des Ladegeräts und andererseits innen von dem Kühlblech begrenzt ist.

Nach einer ganz besonders bevorzugten Ausführungsform der Erfindung ist die Gebläseeinrichtung so angeordnet, dass sie in den Konvektionsbereich hineinfördert, also über den Konvektionsbereich nach außerhalb des Ladegeräts fördert. Die Gebläseeinrichtung kann solchenfalls, je nach Stärke, die sich im Konvektionsbereich im Betrieb des Ladegeräts einstellende konvektive Strömung unterstützen oder gar überlagern. Es kann die konvektive Kühlluftströmung auch nahezu vollständig unterdrücken, indem Luft nur noch durch die Gebläseeinrichtung in den Konvektionsbereich gefördert und von dort über die obere und/oder untere Öffnung nach außerhalb des Ladegeräts geblasen wird.

Des Weiteren erweist es sich als vorteilhaft, wenn im Inneren des Ladegeräts mehrere, vorzugsweise zwei Konvektionsbereiche ausgebildet sind. Beispielsweise wäre es hier denkbar, dass nur der eine Konvektionsbereich in der vorstehend beschriebenen Weise mit der Gebläseeinrichtung zusammenwirkt während der andere Konvektionsbereich hiervon im wesentlichen unbeeinflusst bleibt. In Weiterbildung der Erfindung erweist es sich jedoch weiter als vorteilhaft, wenn der zweite oder ein weiterer Konvektionsbereich, der nicht auf der Abstromseite der Gebläseeinrichtung vorgesehen ist, über eine Verbindungsöffnung mit dem Inneren des Ladegeräts verbunden ist. Bei Inbetriebnahme des Ladegeräts und der Gebläseeinrichtung kann somit eine konvektive Strömung in diesem Konvektionsbereich angestoßen oder unterstützt werden, indem ein Teil der Luftströmung über die genannte Verbindungsöffnung in das Innere des Ladegeräts eingesogen wird. Der Strömungswiderstand dieser Verbindungsöffnung kann dabei insbesondere sehr viel größer gewählt werden als der Strömungswiderstand der Einströmöffnung in der Gehäusewandung angrenzend an den eingesetzten Akkupack. Es kann sich hierbei um eine Strömungsöffnung mit Bypass-Funktion handeln.

Es erweist sich des Weiteren als vorteilhaft, wenn mit Ausnahme der vorerwähnten gegebenenfalls vorgesehenen Verbindungsöffnung zwischen einem Konvektionsbereich und dem Inneren des Ladegeräts das Innere des Ladegeräts im wesentlichen dicht ausgebildet ist und die Luftströmung daher im wesentlichen nur über die Einströmöffnung in das Ladegerät hinein und über die Gebläseeinrichtung aus dem Ladegerät heraus erfolgen kann.

Die Einström- und Ausströmöffnungen, insbesondere auch die Lufteintritts- und Luftausströmöffnungen der Konvektionsbereiche sind vorzugsweise an einer oberen und/oder unteren Gehäusewandung, nicht hingegen an Seitenwandungen des Ladegeräts vorgesehen. Dies eröffnet die Möglichkeit, das Ladegerät in einen seiner Querabmessung im wesentlichen entsprechenden Bereich in einem Regal zwischen weiteren Gegenständen platzsparend anzuordnen, ohne dass die Kühlwirkung herabgesetzt wird. Infolge des üblicherweise in Betriebsstellung nach oben öffnenden Schachts des Ladegeräts ist nämlich die Oberseite ohnehin stets zugänglich zu halten. Da üblicherweise an der Bodenseite Standelemente vorgesehen sind, kann auch Luft von unten in die Konvektionsbereiche eintreten.

Die Erfindung betrifft des Weiteren eine Anordnung aus einem erfindungsgemäßen Ladegerät und einem Akkupack nach Anspruch 11.

Mit der erfindungsgemäßen Anordnung wird kühle Umgebungsluft zunächst zur Kühlung der Akkuzellen des Akkupacks verwendet, wo nämlich beim Laden die meiste Wärme entsteht. Die hierdurch vorerwärmte Kühlluft wird dann über die Luftausströmöffnung des Akkupacks und die Lufteinströmöffnung des Ladegeräts in das Innere des Ladegeräts gesogen und beaufschlagt auf ihrem Weg zur Gebläseeinrichtung wärmeabgebende Bauteile und/oder mit wärmeerzeugenden Bauteilen verbundene Kühlbleche oder Kühlrippen.

Die Lufteinströmöffnung des Akkupacks ist vorzugsweise an der im Ladebetrieb oberen Gehäusewandung und/oder auf der von der Luftausströmöffnung des Akkupacks gegenüberliegenden Seite vorgesehen, so dass die Akkuzellen im Inneren des Akkupacks vorzugsweise über ihre gesamte Länge von eingesogener Kühlluft beaufschlagbar sind.

Die Luftausströmöffnung des Akkupacks ist vorzugsweise in einer Wandung des Akkupacks vorgesehen, die im wesentlichen quer zur Tiefenerstreckung eines Kontaktschafts des Akkupacks verläuft, mit dem dieser in einen Einsteckschacht des Ladegeräts einsetzbar ist.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der Erfindung. In der Zeichnung zeigt:
- Figur 1: eine Längsschnittansicht durch ein erfindungsgemäßes Ladegerät mit eingestecktem Akkupack;
- Figur 2: eine Querschnittansicht gesehen in Richtung der Pfeile II-II in Figur 1;
- Figur 3: eine perspektivische Ansicht einer Unterschale des Ladegeräts nach Figur 1 mit elektronischen Komponenten und

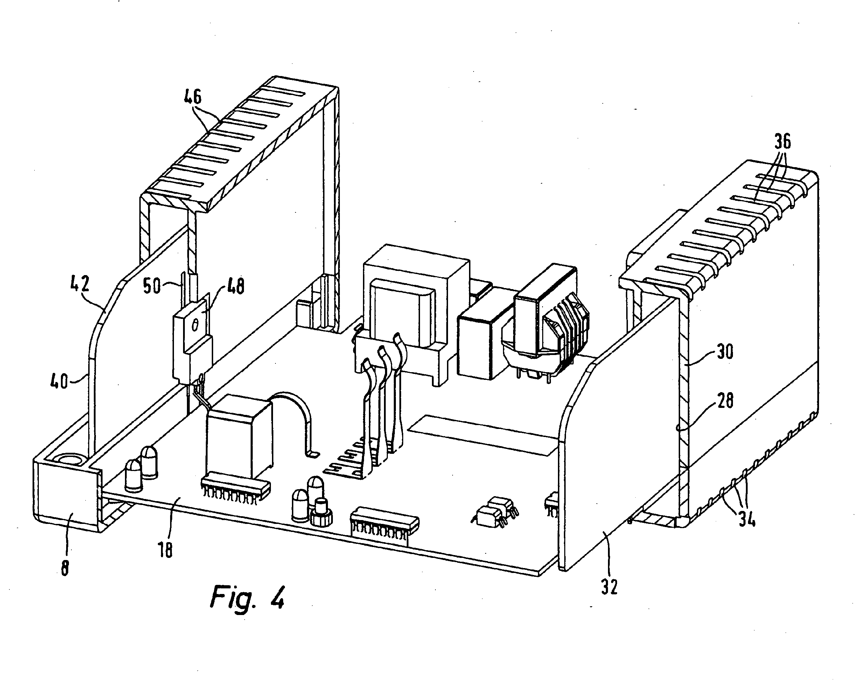

- Figur 4: eine perspektivische Ansicht der Unterschale nach Figur 3 mit teilweise dargestellter Oberschale.

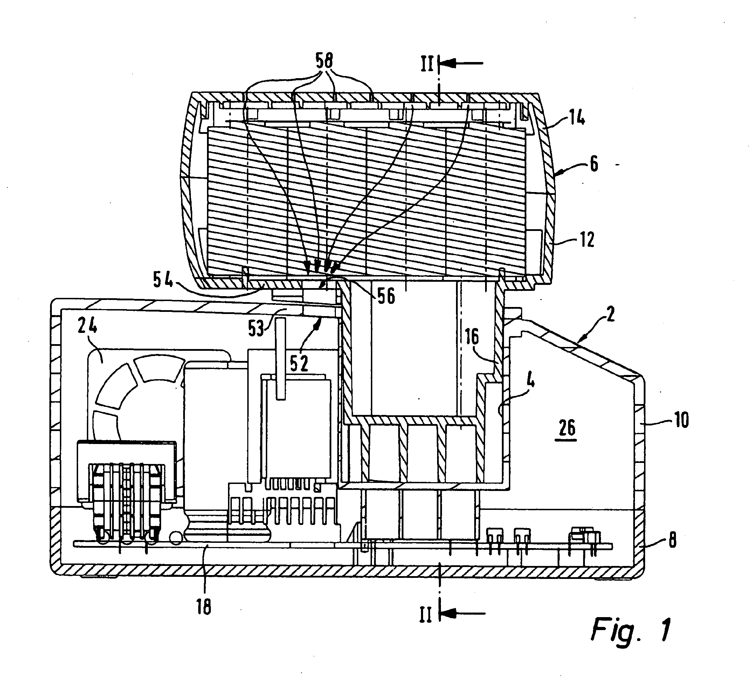

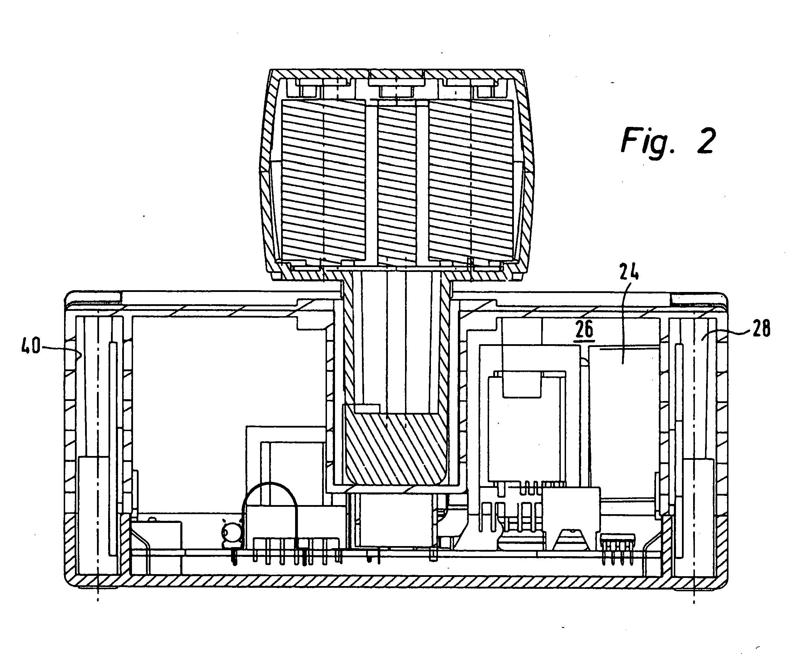

Die Figuren 1 und 2 zeigen in Längs- bzw.

Querschnittansicht ein insgesamt mit dem Bezugszeichen 2 bezeichnetes erfindungsgemäßes Ladegerät mit einem in den Einsteckschacht 4 des Ladegeräts 2 eingesteckten Akkupack 6. Das Ladegerät 2 umfasst eine Gehäuseunterschale 8 und eine Gehäuseoberschale 10, welch letztere den Einsteckschacht 4 begrenzt. Auch der Akkupack 6 ist aus einer oberen und unteren Gehäusehalbschale 12, 14 gebildet, wobei die untere Gehäusehalbschale 12 den Kontaktschaft 16 des Akkupacks 6 bildet.

Wie aus allen Figuren ersichtlich ist, hält oder trägt die Unterschale 8 eine Leiterplatte 18 mit elektronischen Komponenten 20, welche im Betrieb Wärme erzeugen. Ferner dargestellt ist eine Kontaktanordnung 22, die beim Einstecken eines Akkupacks 6 mit Gegenkontakten des Akkupacks kontaktierend zusammenwirkt.

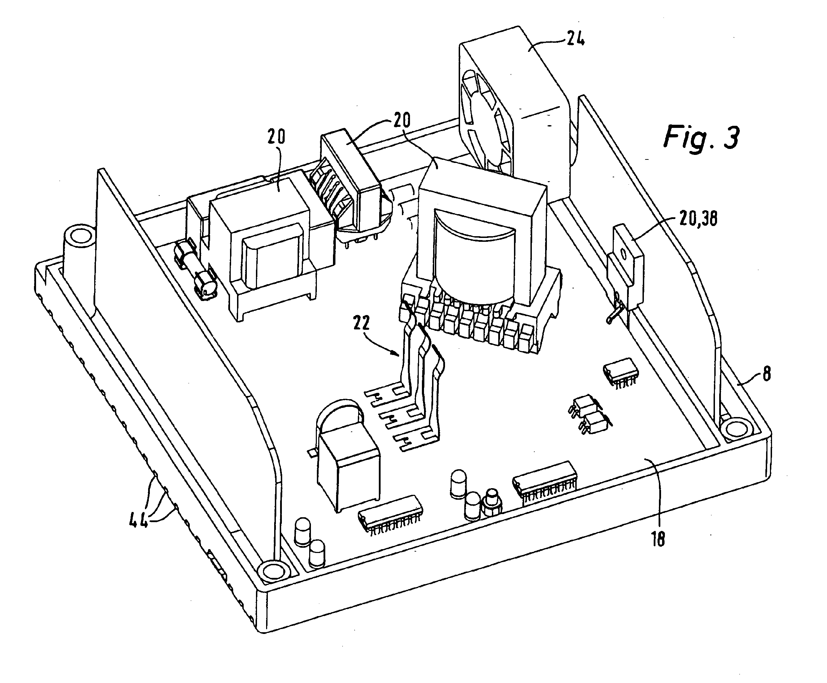

Aus den Figuren 2 und 3 erkennt man ferner eine Gebläseeinrichtung 24, die an der Unterschale 8 befestigt und so orientiert ist, dass sie Luft vom Inneren 26 des Ladegeräts nach außerhalb des Ladegeräts fördert. Die Gebläseeinrichtung 24 fördert die Luft über einen ersten Konvektionsbereich 28 nach außen. Der erste Konvektionsbereich 28 ist begrenzt von einer Seitenwandung 30 der Gehäuseoberschale und einem Kühlblech 32, welches im wesentlichen parallel zu der Seitenwandung 30 verläuft. In der Unterschale 8 sind Lufteintrittsöffnungen 34 und in der Oberschale 10 Luftausströmöffnungen 36 ausgebildet. Im übrigen ist der erste Konvektionsbereich 28 im wesentlichen gegen den Innenraum 26 des Ladegeräts abgedichtet. Die Gebläseeinrichtung saugt somit Luft aus dem Inneren 26 des Ladegeräts in den ersten Konvektionsbereich 28 und durch die Öffnungen 34, 36 nach außerhalb des Ladegeräts 2. Das erwähnte Kühlblech 32 ist thermisch leitend mit einem Leistungstransistor 38 (s. Figur 3) verbunden. Es wird durch eine konvektive Luftströmung gekühlt, die sich einstellt, wenn das Kühlblech 32 die Luft im Inneren des ersten Konvektionsraums 28 erwärmt. Wenn zusätzlich die Gebläseeinrichtung 24 fördert, so wird diese konvektive Luftströmung je nach Gebläsestärke unterstützt oder überlagert; jedenfalls wird ein Luftstrom entlang des Kühlblechs 32 geleitet und kühlt somit wirksam den Leistungstransistor 38.

Auf der gegenüberliegenden Seite ist ein zweiter Konvektionsbereich 40 ausgebildet, der ebenfalls durch ein Kühlblech 42 zur Gehäuseinnenseite hin begrenzt ist. Wiederum sind untere Lufteintrittsöffnungen 44 und obere Luftaustrittsöffnungen 46 vorgesehen. Das Kühlblech 42 ist in entsprechender Weise gekoppelt mit einem weiteren Leistungstransistor 48. Unmittelbar an den Transistor 48 anschließend ist eine Lufteintrittsöffnung 50 in dem Kühlblech 42 vorgesehen, die einen Strömungswiderstand aufweist, der etwa einer der mehreren Luftausströmöffnungen 46 entspricht. Bei Inbetriebnahme der Gebläseeinrichtung 24 wird über diese Lufteintrittsöffnung 50 eine konvektive Strömung in dem zweiten Konvektionsbereich 40 gewissermaßen "angestoßen".

Der meiste Teil der durch die Gebläseeinrichtung 24 in das Innere 26 des Ladegeräts eingesogenen Kühlluft gelangt aber nicht über die bypassartige Lufteintrittsöffnung 50, sondern über eine oder mehrere Lufteinströmöffnungen 52 in der Oberschale 10 in das Innere des Ladegeräts 2. Diese Lufteinströmöffnung 52 ist in einer beim bestimmungsgemäßen Gebrauch oberen Wandung des Ladegeräts 2 vorgesehen, und zwar in einem Bereich 53, in dem eine Wandung des Akkupacks 6 an das Ladegerät 2 angrenzt. Dies ist aus Figur 1 ersichtlich. Man erkennt, dass im eingesteckten Zustand des Akkupacks 6 eine Wandung 54 der unteren Gehäusehalbschale 12 des Akkupacks 6 die Lufteinströmöffnung 52 überfängt.

Unmittelbar der Lufteinströmöffnung 52 gegenüberliegend ist eine Luftausströmöffnung 56 in der Wandung 54 des Akkupacks 6 ausgebildet. Ferner weist der Akkupack 6 in der oberen Gehäusehalbschale 14 Lufteinströmöffnungen 58 auf. Die Luftströmung durch den Akkupack 6 ist durch in Figur 1 dargestellte Pfeile ersichtlich. Im Betrieb der Gebläseeinrichtung 24 wird frische Kühlluft durch die Lufteinströmöffnungen 58 in den Akkupack 6 eingesogen und streicht an den Akkuzellen vorbei und kühlt diese. Ferner gelangt die Luft über die Luftausströmöffnung 56 des Akkupacks und die Lufteinströmöffnung 52 in das Innere 26 des Ladegeräts 2 und beaufschlagt dort die zu kühlenden elektronischen Komponenten 20 auf ihrem Weg zur Gebläseeinrichtung 24.

Die Gebläseeinrichtung 24 wird daher sowohl zur Kühlung der Akkuzellen des Akkupacks 6 als auch zur Kühlung elektronischer Komponenten des Ladegeräts eingesetzt. Es erweist sich als vorteilhaft, dass frische Kühlluft zuerst die Akkuzellen des Akkupacks 6 kühlt, wo die stärkste Wärmeentwicklung stattfindet, und die Kühlluft danach zur Kühlung elektronischer Komponenten verwendet wird.

## Patentansprüche

1. Ladegerät (2) für einen Akkupack (6) eines Elektrohandwerkzeuggeräts, mit einer Gebläseeinrichtung (24) zur Kühlung der Akkuzellen des mit Lufteinströmöffnungen (58) und mit einer Luftausströmöffnung (56) versehenen Akkupacks (6) während des Ladens, wobei die Gebläseeinrichtung (24) so angeordnet ist, dass sie Luft vom Innerer (26) des Ladegeräts (2) nach außerhalb des Ladegeräts (2) fördert und dass in einer Gehäusewandung des Ladegeräts (2) angrenzend an den in das Ladegerät (2) eingesetzten Akkupack (6) eine Einströmöffnung (52) vorgesehen ist, so dass im Betrieb der Gebläseeinrichtung (24) Luft durch die Lufteinströmöffnungen (58) in den Akkupack (6) eingesogen wird und die Luft die Akkuzellen in dem Akkupack (6) hühlt und die Luft über die Luftauströmöffnung (56) des Akkupacks (6) und die Lufteinströmöffnung (52) des Ladegeräts in das Innere (26) des Ladegeräts (2) gelangt und wobei im Betrieb des Ladegeräts und der Gebläseeinrichtung (24) elektronische Komponenten (20) im Inneren (26) des Ladegeräts von durch diese Einströmöffnung (52) in das Ladegerät eingesogener Luft auf deren Weg zur Ansaugseite der Gebläseeinrichtung (24) beaufschlagt und gekühlt sind.

2. Ladegerät nach Anspruch 1, **dadurch gekennzeichnet,**
**dass** im Inneren (26) des Ladegeräts ein mit einer elektronischen Komponente (20) thermisch verbundenes Kühlblech (32) vorgesehen ist, welches so angeordnet ist, dass es vom Luftstrom beaufschlagt ist.

3. Ladegerät nach Anspruch 1 oder 2, **dadurch**
**gekennzeichnet, dass** im Inneren (26) des Ladegeräts ein Konvektionsbereich (28) ausgebildet ist, der über untere Lufteinrittsöffnungen (34) und obere Luftausströmöffnungen (36) konvektiv durchströmbar ist.

4. Ladegerät nach Anspruch 3, **dadurch gekennzeichnet, dass** der Konvektionsbereich (28) von einem mit einer elektronischen Komponente (38) thermisch verbundenen Kühlblech (32) begrenzt ist.

5. Ladegerät nach Anspruch 3 oder 4, **dadurch gekennzeichnet, dass** der Konvektionsbereich (28) einerseits außen von einer Gehäusewandung (30) des Ladegeräts (2) und andererseits innen von dem Kühlblech (32) begrenzt ist.

6. Ladegerät nach einem oder mehreren der vorstehenden Ansprüche, **dadurch gekennzeichnet, dass** die Gebläseeinrichtung (24) in den Konvektionsbereich (28) fördert.

7. Ladegerät nach einem oder mehreren der vorstehenden Ansprüche, **dadurch gekennzeichnet, dass** im Inneren (26) des Ladegeräts (2) mehrere, vorzugsweise zwei Konvektionsbereiche (28, 40) ausgebildet sind.

8. Ladegerät nach einem oder mehreren der vorstehenden Ansprüche, **dadurch gekennzeichnet, dass** ein Konvektionsbereich (40), der nicht auf der Abstromseite der Gebläseeinrichtung (24) vorgesehen ist, über eine Verbindungsöffnung (50) mit dem Inneren (26) des Ladegeräts verbunden ist.

9. Ladegerät nach einem oder mehreren der vorstehenden Ansprüche, **dadurch gekennzeichnet, dass** es eine Unterschale (8) und eine Oberschale (10) als gehäusebildende Komponenten aufweist, von denen eine einen Konvektionsbereich (28, 40) zumindest abschnittsweise begrenzt.

10. Ladegerät nach einem oder mehreren der vorstehenden Ansprüche, **dadurch gekennzeichnet, dass** es eine Unterschale (8) und eine Oberschale (10) als gehäusebildende Komponenten aufweist und die Unterschale (8) eine Leiterplatte (10) mit elektronischen Komponenten hält.

11. Anordnung aus einem Ladegerät (2) nach einem oder mehreren der vorstehenden Ansprüche und einem Akkupack (6), wobei der Akkupack (6) fluchtend mit oder über einen Strömungspfad kommunizierend mit der Lufteinströmöffnung (52) des Ladegeräts (2) eine Luftausströmöffnung (56) und an hiervon beabstandeter Stelle Lufteinströmöffnungen (58) aufweist, so dass im Betrieb der Gebläseeinrichtung (24) des Ladegeräts (2) Kühlluft zunächst über die Lufteinströmöffnungen (58) in den Akkupack (6) eingesogen und zur Kühlung der Akkuzellen verwendet wird und dann weiter über die Luftausströmöffnung (56) des Akkupacks (6) und die Lufteinströmöffnung (52) des Ladegeräts (2) in das Innere (26) des Ladegeräts (2) hineinströmt und dort zur Kühlung elektronischer Komponenten (20, 38) im Inneren (26) des Ladegeräts (2) verwendet wird und über die Gebläseeinrichtung (24) aus dem Ladegerät (2) wieder hinaus gefördert wird.

12. Anordnung nach Anspruch 11, **dadurch gekennzeichnet, dass** die Lufteinströmöffnungen (58) des Akkupacks (6) an der im Ladebetrieb oberen Gehäusewandung und /oder auf der von der Luftausströmöffnung (56) gegenüberliegenden Seite des Akkupacks vorgesehen sind.

## Claims

1. Charging device (2) for an accumulator pack (6) of an electrical hand-held tool, having a fan device (24) for cooling the accumulator cells of the accumulator pack (6) which is provided with air inlet openings (58) and with an air outlet opening (56) during charging, the fan device (24) being arranged in such a manner that it conveys air from the inner side (26) of the charging device (2) to the outer side of the charging device (2), and in that in a housing wall of the charging device (2) adjacent to the accumulator pack (6) inserted in the charging device (2) there is provided an inlet opening (52) so that, when the fan device (24) is operational, air is drawn through the air inlet openings (58) into the accumulator pack (6) and the air cools the accumulator cells in the accumulator pack (6) and the air reaches the inner side (26) of the charging device (2) via the air outlet opening (56) of the accumulator pack (6) and the air inlet opening (52) of the charging device, and, during operation of the charging device and the fan device (24), electronic components (20) at the inner side (26) of the charging device are acted on and cooled by the air drawn in through this inlet opening (52) into the charging device on their travel path to the intake side of the fan device (24).

2. Charging device according to claim 1, **characterised in that** there is provided, at the inner side (26) of the charging device, a cooling sheet (32) which is thermally connected to an electronic component (20) and which is arranged in such a manner that it is acted on by the air flow.

3. Charging device according to claim 1 or claim 2, **characterised in that**, at the inner side (26) of the charging device, there is formed a convection region (28) which allows flow in a convective manner via lower air inlet openings (34) and upper air outlet openings (36).

4. Charging device according to claim 3, **characterised in that** the convection region (28) is delimited by a cooling sheet (32) which is thermally connected to an electronic component (38).

5. Charging device according to claim 3 or claim 4, **characterised in that** the convection region (28) is delimited on the one hand externally by a housing wall (30) of the charging device (2) and on the other hand internally by the cooling sheet (32).

6. Charging device according to one or more of the preceding claims, **characterised in that** the fan device (24) conveys into the convection region (28).

7. Charging device according to one or more of the preceding claims, **characterised in that**, at the inner side (26) of the charging device (2), there are constructed a plurality of, preferably two, convection regions (28, 40).

8. Charging device according to one or more of the preceding claims, **characterised in that** a convection region (40) which is not provided at the discharge side of the fan device (24) is connected to the inner side (26) of the charging device by means of a connection opening (50).

9. Charging device according to one or more of the preceding claims, **characterised in that** it has, as components which form a housing, a lower shell (8) and an upper shell (10), one of which at least partially delimits a convection region (28, 40).

10. Charging device according to one or more of the preceding claims, **characterised in that** it has, as components which form a housing, a lower shell (8) and an upper shell (10), and the lower shell (8) retains a circuit board (10) with electronic components.

11. Arrangement comprising a charging device (2) according to one or more of the preceding claims and an accumulator pack (6), the accumulator pack (6) having, adjacent to or above a flow path communicating with the air inlet opening (52) of the charging device (2), an air outlet opening (56) and, at a location remote therefrom, air inlet openings (58) so that, during operation of the fan device (24) of the charging device (2), cooling air is first drawn via the air inlet openings (58) into the accumulator pack (6) and is used to cool the accumulator cells, and then further flows via the air outlet opening (56) of the accumulator pack (6) and the air inlet opening (52) of the charging device (2) into the inner side (26) of the charging device (2) and is used there to cool electronic components (20, 38) at the inner side (26) of the charging device (2) and is conveyed via the fan device (24) out of the charging device (2) again.

12. Arrangement according to claim 11, **characterised in that** the air inlet openings (58) of the accumulator pack (6) are provided on the housing wall which is at the top during charging operation and/or at the side of the accumulator pack opposite the air outlet opening (56).

## Revendications

1. Chargeur (2) pour un bloc accumulateur (6) d'un outil électrique à main, comportant une soufflerie (24) pour assurer le refroidissement des éléments d'accumulateur du bloc accumulateur (6) pourvu d'ouvertures d'entrée d'air (58) et d'une ouverture de sortie d'air (56) pendant la charge, dans lequel la soufflerie (24) est disposée de manière à refouler de l'air depuis le volume intérieur (26) du chargeur (2) vers l'extérieur du chargeur (2) et dans lequel il est prévu, dans une paroi du boîtier du chargeur (2), une ouverture d'entrée (52) qui est adjacente au bloc accumulateur (6) une fois emboîté dans le chargeur, de sorte que, pendant le fonctionnement de la soufflerie (24), de l'air est aspiré dans le bloc accumulateur (6) à travers les ouvertures d'entrée d'air (58) et l'air refroidit les éléments d'accumulateur contenus dans le bloc accumulateur (6), et qu'en passant par l'ouverture de sortie d'air (56) du bloc accumulateur (6) et par l'ouverture d'entrée d'air (52) du chargeur, l'air parvient dans le volume intérieur (26) du chargeur (2), et dans lequel, pendant le fonctionnement du chargeur et de la soufflerie (24), des composants électroniques (20) situés dans le volume intérieur (26) du chargeur sont léchés et refroidis par de l'air aspiré dans le chargeur à travers cette ouverture d'entrée (52), sur son trajet vers le côté aspiration de la soufflerie (24).

2. Chargeur selon la revendication 1, **caractérisé en ce qu'**il est prévu dans le volume intérieur (26) du chargeur une ailette de refroidissement (32) reliée thermiquement à un composant électronique (20), qui est disposée de manière à être léchée par le flux d'air.

3. Chargeur selon la revendication 1 ou 2, **caractérisé en ce que**, dans le volume intérieur (26) du chargeur, est formée une région de convection (28) qui peut être parcourue par convection grâce à des ouvertures d'entrée d'air inférieures (34) et des ouvertures de sortie d'air supérieures (36).

4. Chargeur selon la revendication 3, **caractérisé en ce que** la région de convection (28) est limitée par une ailette de refroidissement (32) reliée thermiquement à un composant électronique (38).

5. Chargeur selon la revendication 3 ou 4, **caractérisé en ce que** la région de convection (28) est limitée, d'un côté, vers l'extérieur, par une paroi (30) du boîtier du chargeur (2) et, de l'autre, vers l'intérieur, par l'ailette de refroidissement (32).

6. Chargeur selon l'une ou plusieurs des revendications précédentes, **caractérisé en ce que** la soufflerie (24) débite dans la région de convection (28).

7. Chargeur selon l'une ou plusieurs des revendications précédentes, **caractérisé en ce que** plusieurs, de préférence deux, régions de convection (28, 40) sont formées dans le volume intérieur (26) du chargeur (2).

8. Chargeur selon l'une ou plusieurs des revendications précédentes, **caractérisé en ce qu'**une région de convection (40), qui n'est pas prévue sur le côté de sortie de la soufflerie (24), est reliée au volume intérieur (26) du chargeur par une ouverture de communication (50).

9. Chargeur selon l'une ou plusieurs des revendications précédentes, **caractérisé en ce qu'**il comporte une coque inférieure (8) et une coque supérieure (10) en tant qu'éléments constitutifs du boîtier, dont l'une délimite, au moins en partie, une région de convection (28, 40).

10. Chargeur selon l'une ou plusieurs des revendications précédentes, **caractérisé en ce qu'**il comporte une coque inférieure (8) et une coque supérieure (10) en tant qu'éléments constitutifs du boîtier et la coque inférieure (8) porte une carte de circuit imprimé (10) équipée de composants électroniques.

11. Dispositif composé d'un chargeur (2) selon l'une ou plusieurs des revendications précédentes et d'un bloc accumulateur (6), dans lequel le bloc accumulateur (6) comporte une ouverture de sortie d'air (56) placée dans l'alignement de l'ouverture d'entrée d'air (52) du chargeur (2), ou communiquant avec elle par un passage de flux, et des ouvertures d'entrée d'air (58) à un emplacement qui en est éloigné, de sorte que, pendant le fonctionnement de la soufflerie (24) du chargeur (2), de l'air de refroidissement est tout d'abord aspiré dans le bloc accumulateur (6) en passant par les ouvertures d'entrée d'air (58) et utilisé pour le refroidissement des éléments d'accumulateur, puis, en passant par l'ouverture de sortie d'air (56) du bloc accumulateur (6) et par l'ouverture d'entrée d'air (52) du chargeur (2), pénètre dans le volume intérieur (26) du chargeur (2) et, là, est utilisé pour le refroidissement des composants électroniques (20, 38) contenus dans le volume intérieur (26) du chargeur (2) et de nouveau expulsé du chargeur (2) sous l'action de la soufflerie (24).

12. Dispositif selon la revendication 11, **caractérisé en ce que** les ouvertures d'entrée d'air (58) du bloc accumulateur (6) sont ménagées dans la paroi du boîtier qui est la paroi supérieure dans le régime de charge et/ou sur le côté du bloc accumulateur qui est à l'opposé de l'ouverture de sortie d'air (56).
